# EUROPEAN PATENT SPECIFICATION

(11) **EP 2 196 482 B1**
(45) Date of publication and mention of the grant of the patent: **28.02.2018**
(21) Application number: 09176706.1
(22) Date of filing: 23.11.2009
(51) Int. Cl.: C08F 263/04, C08F 255/00, C08F 230/08, C08L 51/00, C08L 51/06, C08F 8/12, C08J 3/24, C08F 8/00, C08G 81/02, H01B 3/44, H01B 7/295, C08F 255/02, C08K 5/14, C08K 5/098, C08K 3/22

(54) **Silane-grafted alpha-olefin-vinyl acetate copolymer containing crosslinkable silyl groups, process for the preparation thereof and use for the preparation of insulation or sheath materials for cables or lines**
Silangepfropftes Alphaolefin-Vinylacetat-Copolymer mit vernetzbaren Silylgruppen, Verfahren zur Herstellung davon und Verwendung zur Herstellung von Isolierung oder Hüllenmaterialien für Kabel und Leitungen
Copolymère d'alpha-oléfine-acétate de vinyle greffé par des silanes contenant des groupes silyle réticulables, leur procédé de préparation et leur utilisation pour la préparation de matériaux d'isolation ou de protection pour des câbles ou des lignes

(30) Priority: 05.12.2008 WO PCT/CN2008/073361
(43) Date of publication of application: 16.06.2010
(73) Proprietor: ARLANXEO Deutschland GmbH, 41540 Dormagen (DE)
(72) Inventor: Kelbch, Stefan, 53804, Much (DE); La Rosa, Manuel, 50674, Köln (DE); Hoch, Martin, 201203, Shanghai (CN)
(74) Representative: Wichmann, Birgid

(56) References cited:
- EP-A1- 0 529 884
- EP-A2- 0 307 755
- WO-A1-86/04594
- WO-A1-2006/132452
- GB-A- 1 406 680
- GB-A- 1 450 934
- US-A1- 2008 023 680

## Description

The present invention relates to compositions containing a grafted α-olefin-vinyl acetate copolymer containing crosslinkable silyl groups which is composed of one or more α-olefin-vinyl acetate copolymers as component A, of which at least one, as component A1, has a vinyl acetate content of ≥ 60% by weight, based on the total weight of the α-olefin-vinyl acetate copolymer A1, and at least one unsaturated silane which contains at least one hydrolysable group and which is grafted on to the one α-olefin-vinyl acetate copolymer or a plurality of α-olefin-vinyl acetate copolymers, as component B. The present invention furthermore relates to crosslinkable compositions containing the grafted α-olefin-vinyl acetate copolymer according to the invention and at least one crosslinking catalyst, the use of the crosslinkable compositions according to the invention for the production of insulation or sheath materials for cables or lines, a process for the crosslinking of the compositions according to the invention by bringing the crosslinkable compositions into contact with water, crosslinked compositions obtainable by the crosslinking process according to the invention, and insulation or sheath materials for cables or lines containing the crosslinked composition according to the invention.

The cables and lines are used in a multiplicity of applications, for example in the area of telecommunications, in the area of the automotive industry, in industry and household, in shipping, in the railway, in the military area and in the area of offshore exploration. The required performance characteristics of the cables and lines are important for the choice of the materials for insulations and further protective coverings, e.g. sheaths. In particular, criteria such as sufficient operational safety and operational life, environmental compatibility and costs are important for the choice of suitable insulation and sheath materials.

Regarding the operational safety, inter alia the electrical properties of the insulation are important in addition to the correct choice of the conductor.

From the point of view of the operational life (life in use), for example, consideration of the temperatures of use and further conditions of use, such as mechanical load due to bending (inter alia, bending at low temperatures), the thermal expansion behaviour (determined by means of the hotset test), chemical influences due to organic hydrocarbons, such as greases and oils (e.g. in the wiring of various automotive parts or their electrical equipment of automobiles), and UV radiation and the ageing behaviour play a role in the choice of the insulation and sheath materials.

Regarding the environmental compatibility, requirements are set in particular regarding recyclability, regarding freedom from halogens and regarding behaviour in the case of fire.

For the cost-oriented choice of suitable materials, the processing costs and the capital costs, for example for crosslinking plants, should be taken into account in addition to the procurement costs and the specific material consumption.

Polyvinyl chloride (PVC) is of the greatest importance as insulation and sheath material in the cable industry. The PVC can be modified by the use of plasticizers, stabilizers, fillers and lubricants for a wide range of applications. Apart from the high dielectric loss factor, however, the behaviour of PVC in the case of a fire is disadvantageous. Although PVC is considered to be non-flammable, the pronounced evolution of smoke and the corrosive gases forming as a result of elimination of chlorine are problematic in the case of fire.

In addition to PVC, halogen-free thermoplastic materials, such as polyethylene (PE), ethylene-vinyl acetate copolymer (EVA) and the corresponding crosslinked polymers have therefore acquired substantial importance as insulation and sheath materials in the cable industry. Crosslinking can be effected, for example, by means of peroxides. In addition, crosslinking (in particular in the case of cables and lines in the 1 kV range) can also be effected by silane crosslinking. The silane crosslinking requires substantially less technical effort than other methods of crosslinking since the normal plant technology for cable production can still be used through the use of modified materials. The silane crosslinking is generally effected after the production of the lines or cables by the influence of heat and moisture.

WO 2006/118253 relates to halogen-free, insulated wire comprising a conductor, an inner coating which is formed from one or more layers and is arranged so that it covers the conductor, and an outer coating which is arranged so that it covers the inner coating, the outer coating having a thickness in the range of 10 to 100 µm and being produced from a resin composition comprising at least one olefin resin having a melting point of 180°C or higher and an olefin resin having an -Si(X₁)(X₂)(X₃) group (X₁, X₂ and X₃ being alkyl or alkoxy groups, and at least one of the groups X₁, X₂ and X₃ being an alkoxy group). In the description in WO 2006/118253, numerous different olefin resins are mentioned as suitable olefin resins. According to the examples, polypropylene or polyethylene containing -Si(X₁)(X₂)(X₃) groups are used as olefin resins. The halogen-free, insulated wire according to WO 2006/118253 having a multilayer structure has, according to WO 2006/118253, adequate flame-retardant properties and excellent thermal stabilities, wear resistances and flexibilities. It is therefore particularly preferably used in areas which are exposed to high temperatures or vibrations. Regarding resistance of the halogen-free, insulated wires to organic hydrocarbons, e.g. greases and oils, WO 2006/118253 contains no information.

EP-A 0 656 390 relates to a highly flame-retardant, halogen-free cohesively tearable material which is pliant at low temperature and is intended for cable coatings. The material has a first ethylene-vinyl acetate copolymer which has 40 to 50% by weight of acetate, a second ethylene-vinyl acetate copolymer which has 30 to 50% by weight of acetate, a silane having been grafted on to the second copolymer, and an ethylene-propylene copolymer which has between 60 and 75% by weight of ethylene, and a flame retardant. The covering material according to EP-A 0 656 390 can be easily torn off at room temperature without a cutting tool being required, while it has good fire resistance and very good flexibility at low temperature in the absence of a halogen. Regarding resistance of the polymer mixture used according to EP-A 0 656 390 as covering material for cables to organic hydrocarbons, EP-A 0 656 390 contains no information.

WO 01/34662 discloses grafted ethylene copolymers which are crosslinkable by moisture and are processable in the melt. The compositions contain an ethylene copolymer grafted with silyl and in particular small proportions of glycidyl acrylate terpolymers. They are suitable for use in cables and lines and for hotmelt adhesives. According to WO 01/34662, aminosilanes are preferably used for the silane grafting. Suitable ethylene copolymers are terpolymers which are composed of ethylene, alkyl acrylate, alkyl methacrylate or vinyl acetate and of glycidyl-containing monomer. These terpolymers are grafted with aminosilanes. According to WO 01/34662, it was found that an ethylene-vinyl acetate copolymer which has a specific amount of a glycidyl comonomer which is subsequently grafted with an N-substituted aminopropyltrimethoxysilane is very suitable for cables or lines since it is distinguished by good crosslinking properties in the presence of moisture and good heat-curing properties. Regarding resistance of the cables and lines mentioned in WO 01/34662 to organic hydrocarbons, WO 01/34662 contains no information.

WO 00/19452 discloses self-extinguishing cables which are coated with a flame-retardant composition. The compositions contain an ethylene homo- or -copolymer selected from ethylene homopolymers, copolymers of ethylene with an α-olefin, copolymers of ethylene with an ethylenically unsaturated ester or mixtures thereof as component (a), a copolymer of ethylene with at least one α-olefin and optionally with a diene as component (b), magnesium hydroxide as component (c), wherein at least one of the polymeric components (a) and (b) has a hydrolysable organic silane group which is grafted on to the polymer chain. According to the description, copolymers of ethylene with an ethylenically unsaturated ester can be used, the ester being present in an amount of 5 to 50% by weight. For example, copolymers of ethylene with vinyl acetate can be used. According to the examples in WO 00/19452, ethylene/1-octene copolymers are used. WO 00/19452 contains no information regarding the resistance of the mixtures used to organic hydrocarbons.

WO 03/082966 discloses crosslinkable and/or crosslinked compositions containing nano filling material which contain crosslinkable and/or crosslinked polyethylene or crosslinkable and/or crosslinked ethylene copolymers. The compositions according to WO 03/082966 are distinguished by improved barrier properties, strength and heat resistance, so that they are suitable for numerous applications comprising medical applications, applications in the automotive sector, electrical applications, applications in the building sector and applications in the food sector. The compositions containing nano fillers are said to be suitable in particular for applications at high temperatures and in a difficult environment (in the environment of chemicals, solutions, oils, fuels). The description of WO 03/082966 mentions the numerous different, suitable ethylene copolymers, inter alia ethylene-vinyl acetate copolymers. This can be grafted with a vinyl silane. Silane crosslinking follows after the production of the article by extrusion, film formation and/or moulding in the presence of water, steam or moisture and a catalyst. In Example 12 of WO 03/082966, a mixture which, in addition to polyethylene and a nano filler, has an ethylene-vinyl acetate copolymer and a vinyl silane is used. The ethylene-vinyl acetate copolymer has a vinyl acetate content of 9.3% by weight.

DE-A 2 350 876 discloses a process for the crosslinking of ethylene-vinyl acetate copolymers. The ethylene-vinyl acetate copolymer used is grafted with a silane and is exposed to the action of water in the presence of a silane condensation catalyst for crosslinking. According to DE-A 2 350 876, the process can be used for the production of electrical insulations and crosslinked films. In the examples in DE-A 2 350 876, an ethylene-vinyl acetate copolymer which contains 20 mol% of vinyl acetate is used. The crosslinked ethylene-vinyl acetate copolymer obtained according to DE-A 2 350 876 has, according to DE-A 2 350 876, improved strength at elevated temperatures, improved resistance to compression sets and improved properties on oven ageing in the presence of air. Resistance to organic hydrocarbons is not mentioned in DE-A 2 350 876.

The abovementioned documents relate to thermoplastic materials crosslinked by means of silane and the use thereof in cable applications. Owing to their property profile, apart from the use of thermoplastic materials, the use of resilient materials which can be crosslinked in a simple manner by means of silane is of interest.

DE-A 37 31 054 discloses ethylene/vinyl acetate copolymers which have a high content of 40 to 98% by weight of vinyl acetate incorporated in the form of polymerized units. Ethylene-vinyl acetate copolymers which have high vinyl acetate contents of > 40% by weight are elastomers - in contrast to ethylene-vinyl acetate copolymers having low vinyl acetate contents. The ethylene/vinyl acetate copolymers mentioned according to DE-A 37 31 054 can be used for the production of seals, insulations, cable sheets, cable conduits, tubes and sound insulation materials. Furthermore, the copolymers can be used for the preparation of vulcanizates. Crosslinking by means of silanes or silane-grafted ethylene-vinyl acetate copolymers having the high vinyl acetate contents mentioned according to DE-A 37 31 054 are not mentioned in DE-A 37 31 054.

The crosslinking of elastomers by means of silane is not known in the prior art.

WO-A-2006/132452, EP-A-307755 und EP-A- 0259884 disclose the crosslinking of ethylene-vinyl acetate copolymer with a vinyl acetate content of > 60% by weight by means of a crosslinker in the presence of a silane. These publications do not describe a compositions containing a grafted a-α-olefln olefin-vinyl acetate copolymer according to the present invention, which can be crosslinked by a humid atmosphere or by immersion into water.

It is therefore an object of the present invention, compared with the abovementioned prior art, to provide rubber-like polymers or polymer mixtures based on silane-crosslinked elastomers which are distinguished in particular for the production of covering and insulation materials for cables and lines, i.e. they have a balanced property profile for the abovementioned application so that cables and lines having high operational safety, operational life and environmental compatibility can be economically provided. In particular, covering and insulation materials for cables and lines which have good resistance to organic hydrocarbons in addition to the abovementioned balanced property profile and which can take up high filler contents (e.g. flame proofing agents) are to be provided.

This object is achieved by compositions containing a grafted α-olefin-vinyl acetate copolymer containing crosslinkable silyl groups, composed of
a) one or more α-olefin-vinyl acetate copolymers as component A, off which at least one, as component A1, has a vinyl acetate content of ≥ 60% by weight, based on the total weight of the α-olefin-vinyl acetate copolymer A1, and
b) at least one unsaturated silane which contains at least one hydrolysable group and which is grafted on to the component A, as component B.
grafted on to the component A, as component B.

Owing to the crosslinkable silyl groups present, the grafted α-olefin-vinyl acetate copolymer according to the invention can be crosslinked with little technical effort, in particular by means of moisture. By providing the elastomeric α-olefin-vinyl acetate copolymers according to the invention, elastomers which are crosslinkable with the use of the normal plant technology for cable production are provided for the first time. Crosslinking of the elastomers by customary crosslinking methods, such as complicated vulcanization, by radiation, etc. is not required, so that crosslinking be carried out, for example, on the cable manufacturer's premises without complicated apparatus.

The compositions according to the invention are halogen-free flame-retardant (HFFR), polymeric materials which can be processed to give articles in which the fire safety is of importance. The compositions according to the invention are preferably used for the production of insulation or sheath materials for cables and lines. The crosslinked compositions obtained from the grafted α-olefin-vinyl acetate copolymers are distinguished in particular by outstanding resistance to organic hydrocarbons, in particular fuel or oil. Furthermore, they have a balanced property profile suitable for use as insulation and covering materials for cables and lines, regarding in particular the rheological and physical properties, such as a high green strength, for example in order to avoid crushing during the rolling up of cables, sufficient melt flow index (MFI) in order to guarantee outstanding processability, the ability to take up high filler contents and a good shelf life. Sheath and insulation materials produced from the grafted α-olefin-vinyl acetate copolymers preferably fulfil the specifications customary in the cable sector, e.g. NEK 606, IEEE 1580, BS 6883, EN 50264, EM2 and 2 PfG 1169.

The grafted α-olefin-vinyl acetate copolymers according to the present invention which are suitable for silane crosslinking are preferably used in the low voltage range (LV) and medium voltage range (MV) in cables and lines. The low voltage range generally comprises a range of < 1kV and the medium voltage range of 1 kV to 36 kV.

In the context of the present application, the statement of "halogen-free" means that amounts of halogen over and above impurities are not present either in the composition according to the invention or in the individual components of the composition according to the invention. The halogen content of the compositions according to the invention or the halogen content of the components A to E and optionally F is generally therefore 0 to 5% by weight, preferably 0 to 3% by weight, particularly preferably 0 to 1% by weight, based on the total weight of the composition or based on the respective component.

### a) One or more α-olefin-vinyl acetate copolymer as component A

The grafted α-olefin-vinyl acetate copolymer according to the invention is composed of one or more α-olefin-vinyl acetate copolymers as component A. At least one of the α-olefin-vinyl acetate copolymers has a vinyl acetate content of ≥ 60% by weight, based on the total weight of this α-olefin-vinyl acetate copolymer (component A1, preferably > 60 to 98% by weight). Particularly preferably, the component A1 has a vinyl acetate content of ≥ 70% by weight, very particularly preferably a vinyl acetate content of 70 to 98% by weight, in particular very particularly preferably a vinyl acetate content of 70 to 90% by weight.

As a result of the high vinyl acetate contents, the α-olefin-vinyl acetate copolymers having a vinyl acetate content of ≥ 60% by weight, based on the total weight of the α-olefin-vinyl acetate copolymer, are completely amorphous elastomers. In comparison, α-olefin-vinyl acetate copolymers having a proportion of ≤ 40% by weight of vinyl acetate, which are mentioned in the prior art as insulation or covering material for cables, are thermoplastics.

It is known to the person skilled in the art that elastomers and thermoplastics differ substantially both in their property profile and in their processing profile, owing to their different amorphicity. Thus, compositions which have a completely different property profile compared with α-olefin-vinyl acetate copolymers which have a vinyl acetate content of ≥ 40% by weight are obtained with the use of α-olefin-vinyl acetate copolymers having a vinyl acetate content of ≤ 60% by weight.

In the following table, which is published under the address http://www.mb.hs-wismar.de/-hansmann/Downloads/Meng/Kunststofftechnologie/Spritzguss/Spritzguss_36a_T on page 1 of the homepage of Prof. Dr.-Ing. Harald Hansmann (Hochschule Wismar) (date of inspection of the publication: 9 July 2008), some properties of thermoplastics and elastomers are compared:

**Table 1: Comparison of thermoplastics and elastomers**

| **Property** | **Thermoplastic** | **Elastomer** |
|---|---|---|
| Form delivered | Granules | Strips (infrequently also granules) |
| Fusible | Yes | No |
| Compression set (CS) | Low | Very low |
| Resilience | Low | Extremely high |
| Thermal stability | Low | High |
| Shaping | By cooling | By energy supply |
| Recyclable | Possible | Not possible |

In an embodiment of the present invention (Embodiment 1), the α-olefin-vinyl acetate copolymer used as component A is composed exclusively of the component A1, i.e. of an α-olefin-vinyl acetate copolymer having a vinyl acetate content of ≥ 60% by weight, preferably ≥ 70% by weight, particularly preferably 70 to 98% by weight, very particularly preferably 70 to 90% by weight, based on the total weight of the component A1.

In a further embodiment of the present invention (Embodiment 2), a mixture of a plurality of α-olefin-vinyl acetate copolymers is used, of which at least one, component A1, has a vinyl acetate content of ≥ 60% by weight, preferably ≥ 70% by weight, particularly preferably 70 to 98% by weight, very particularly preferably 70 to 90% by weight, based on the total weight of the α-olefin-vinyl acetate copolymer A1, and corresponds to the component A according to Embodiment 1.

The α-olefin-vinyl acetate copolymer or the further α-olefin-vinyl acetate copolymers used as components A2, A3, etc. according to Embodiment 2 may have any vinyl acetate content. Usually, the vinyl acetate contents in the further components A2, A3, etc. are 5 to 98% by weight, particularly preferably 10 to 90% by weight, very particularly preferably 20 to 80% by weight, based in each case on the total weight of the respective components A2 or A3, etc. In a preferred embodiment (according to Embodiment 2), a mixture of three different α-olefin-vinyl acetate copolymers A1, A2 and A3 is used, the component A1 already having been defined above. The component A2 generally has a vinyl acetate content of 9 to 50% by weight, preferably 9 to 33% by weight, particularly preferably 9 to 28% by weight, based on the total weight of the α-olefin-vinyl acetate copolymer A2. The component A3 generally has a vinyl acetate content of 9 to 33% by weight, preferably 18 to 28% by weight, based on the total weight of the α-olefin-vinyl acetate copolymer A3.

vinyl acetate content) and particularly good homogeneity of the mixture containing the components A1, A2 and A3 can thus be achieved.

In general, the proportion of the component A1 in a mixture of a plurality of α-olefin-vinyl acetate copolymers as component A corresponding to Embodiment 2 is 30 to 50% by weight, preferably 40 to 50% by weight, particularly preferably 45 to 50% by weight. The proportion of the component A2 is in general 10 to 45% by weight, preferably 25 to 45% by weight, particularly preferably 35 to 45% by weight. The proportion of the component A3 is in general 5 to 50% by weight, preferably 5 to 30% by weight, particularly preferably 5 to 20% by weight, the total sum of the components A1, A2 and A3 being 100% by weight.

In principle, the component A according to Embodiment 2 may also be composed of more than three different α-olefin-vinyl acetate copolymers. It is furthermore possible for the component A according to Embodiment 2 to be composed of two different α-olefin-vinyl acetate copolymers, e.g. A1 and A2 or A1 and A3.

In the compositions according to Embodiment 2, the total content of vinyl acetate is 55 to 70% by weight, based on the total weight of the component A, which is composed of a plurality of α-vinyl acetate copolymers.

By using mixtures of a plurality of α-olefin-copolymers (blends) according to Embodiment 2, it is possible to establish the optimum processing properties in combination with optimum physical properties of the blends and of the products produced therefrom.

It was found that, according to Embodiment 2 of the present application, it is possible to provide α-olefin-vinyl acetate copolymers. In the blends according to Embodiment 2 of the present application, the advantageous processing properties of the blends are therefore associated with the advantageous product properties of α-olefin-vinyl acetate copolymers having high vinyl acetate contents.
Processing auxiliaries can be added for the preparation of mixtures of the components A1, A2, A3, etc. Suitable processing auxiliaries are known to the person skilled in the art and are selected, for example, from stearic acid (e.g. Edenor® C 18 98-100 from Cognis), primary fatty acid amines, e.g. octadecylamine (e.g. Armeen® 18 D from Akzo Nobel or Aflux® 18 from Rhein-Chemie). The processing auxiliaries - if they are added at all - are used in each case in an amount of in general 0.5 to 4 phr, preferably 1 to 3 phr, where phr denotes "parts per 100 of rubber", i.e. - both according to Embodiment 1 and according to Embodiment 2 - based on 100 parts by weight of the component A.
The α-olefin-vinyl acetate copolymers used in component A may have one or more further comonomer units (e.g. terpolymers), for example based on vinyl esters and/or (meth)acrylates, in addition to the monomer units based on the α-olefin and vinyl acetate.
The further comonomer units - if further comonomer units are present at all in one or more of the α-olefin-vinyl acetate copolymers used in the component A - are present in a proportion of up to 10% by weight, based on the total weight of the α-olefin-vinyl acetate copolymer, the proportion of the monomer units based on the α-olefin decreasing accordingly. It is therefore possible to use, for example, α-olefin-vinyl acetate copolymers which are composed of ≥ 60 to 98% by weight of vinyl acetate, 2% by weight to ≤ 40% by weight of α-olefin and 0 to 10% by weight of at least one further comonomer, the total amount of vinyl acetate, α-olefin and the further comonomers being 100% by weight. In a preferred embodiment, α-olefin-vinyl acetate copolymers which have no further monomer units are used as component A.
All known α-olefins, independently of one another, can be used as α-olefins in the α-olefin-vinyl acetate copolymers used in the component A. The α-olefin is preferably selected from the group consisting of ethene, propene, butene, in particular n-butene and isobutene, pentene, hexene, in particular 1-hexene, heptene, in particular 1-heptene, and octene, in particular 1-octene. It is also possible to use higher homologues of said α-olefins as α-olefins in the α-olefin-vinyl acetate copolymers used in the component A. The α-olefins may furthermore carry substituents, in particular C₁-C₅-alkyl radicals. However, the α-olefins preferably carry no further substituents. Preferred α-olefins are ethene and propene, ethene being very particularly preferably used as an α-olefin in the α-olefin-vinyl acetate copolymers used in the component A. Thus, the α-olefin-vinyl acetate copolymers preferably used as component A are ethylene-vinyl acetate copolymers.

Particularly preferably, at least one of the ethylene-vinyl acetate copolymers (component A1) used as component A has a vinyl acetate content of ≥ 60% by weight to 98% by weight, preferably ≥ 70% by weight to 98% by weight, particularly preferably > 70% by weight to 90% by weight, and an ethylene content of 2 to ≤ 40% by weight, preferably 2% by weight to ≤ 30% by weight, particularly preferably 10% by weight to ≤ 30% by weight, the total amount of vinyl acetate and ethylene being 100% by weight. Regarding the vinyl acetate contents of further ethylene-vinyl acetate copolymer A2, A3, etc. according to Embodiment 2 which are used in the component A, the vinyl acetate contents mentioned above regarding α-olefin-vinyl acetate copolymers are applicable.

The α-olefin-vinyl acetate copolymer used as component A1 in the component A and optionally further α-olefin-vinyl acetate copolymers A2, A3, etc., which have a vinyl acetate content of ≥ 40% by weight, the corresponding ethylene-vinyl acetate copolymers being preferred, are prepared in a preferred embodiment by a solution polymerization process at a pressure of 100 to 700 bar, preferably at a pressure of 100 to 400 bar. The solution polymerization process is preferably carried out at temperatures of 50 to 150°C, in general free radical initiators being used. Suitable preparation processes for the abovementioned α-olefin-vinyl acetate copolymers prepared by solution polymerization processes are mentioned, for example, in EP-A 0 341 499, EP-A 0 510 478 and DE-A 38 25 450.

Usually, the ethylene-vinyl acetate copolymers used as component A1 or as further components A2, A3, etc. having a vinyl acetate content of ≥ 40% by weight are referred to as EVM copolymers, where the "M" in the designation indicates the saturated backbone of the methylene main chain of the EVM.

The α-olefin-vinyl acetate copolymers which are used as component A1 or optionally as further components A2, A3, etc. having a vinyl acetate content of ≥ 40% by weight and prepared by the solution polymerization process at a pressure of 100 to 700 bar are distinguished in particular by low degrees of branching and hence low viscosities. Furthermore, these α-olefin-vinyl acetate copolymers have a statistically more uniform distribution of their building blocks (α-olefin and vinyl acetate) than α-olefin-vinyl acetate copolymers prepared by other processes.

The α-olefin-vinyl acetate copolymers, preferably ethylene-vinyl acetate copolymers, used above as component A1 and optionally as further components A2, A3, etc. having a vinyl acetate content of ≥ 40% by weight in the component A generally have MFI values (g/10 min), measured according to ISO 133 at 190°C and a load of 21.1 N, of 1 to 40, preferably 1 to 10, particularly preferably 2 to 6. The Mooney viscosities of said α-olefin-vinyl acetate copolymers according to DIN 53 523 ML 1+4 at 100°C are in general 3 to 50, preferably 4 to 35, Mooney units.

For example, ethylene-vinyl acetate copolymers having a vinyl acetate content of 75 to 98% by weight, a gel content of < 0.5% by weight and a weight average molecular weight of > 150 000, as described, for example, in DE-A-37 31 054, are suitable as component A1.

Particularly suitable α-olefin-vinyl acetate copolymers A2, A3, etc. which are used as component A1 or optionally as α-olefin-vinyl acetate copolymers having a vinyl acetate content of ≥ 60% by weight in the component A are ethylene-vinyl acetate copolymers which are commercially available, for example, under the trade names Levapren® or Levamelt® from Lanxess Deutschland GmbH. These are particularly preferably ethylene-vinyl acetate copolymers, such as Levapren®600, Levapren®700, Levapren®800 and Levapren®900, for example Levapren®600, Levapren®700, Levapren®800 and Levapren®900 having vinyl acetate contents of 60 ± 1.5% by weight, 70 ± 1.5% by weight, 80 ± 2% by weight and 90 ± 2% by weight, respectively or the corresponding Levamelt® types being suitable as component A1.

Of course, the components A2, A3, etc. present as further components optionally in addition to the component A1 may be, likewise independently of the component A1, above-described α-olefin-vinyl acetate copolymers having a content of ≥ 60% by weight. Furthermore, the components A2, A3, etc. optionally present in addition to the component A1 may be any α-olefin-vinyl acetate copolymers known to the person skilled in the art. These can be prepared by any processes known to the person skilled in the art. If the α-olefin-vinyl acetate copolymers present in the further components A2, A3, etc. have vinyl acetate contents of ≥ 40% by weight, they are preferably prepared by a solution polymerization process disclosed in EP-A-0 341 499, EP-A-0 510 478 or DE-A-38 25 450. Suitable components A2, A3, etc. are in particular ethylene-vinyl acetate copolymers which are obtainable, for example under the trade name Levapren® or Levamelt® from Lanxess Deutschland GmbH, such as Levapren®400, Levapren®450, Levapren®452, Levapren®456, Levapren®500.

The use according to the invention of α-olefin-vinyl acetate copolymers having a high vinyl acetate content for providing the grafted α-olefin-vinyl acetate copolymers which are suitable in particular for the production of insulation and sheath materials for cables or lines has, in addition to the outstanding resistance of the grafted α-olefin-vinyl acetate copolymers to organic compounds, in particular oil or fuel, the advantage that the grafted α-olefin-vinyl acetate copolymers, owing to their high polarity due to the presence of a large proportion of vinyl acetate used in the copolymer, have outstanding compatibility with polar fillers. The products based on the α-olefin-vinyl acetate copolymers according to the invention have a balanced property profile, in particular good flexibility and hardness, even at high filler contents. This is important since compositions which contain α-olefin-vinyl acetate copolymers and are used as insulation and sheath materials must be provided with large amounts of flame proofing agents in order to meet the requirements of the insulation and sheath materials with regard to the necessary flame resistance. Flame proofing agents usually used are polar fillers, such as metal hydroxides, suitable metal hydroxides being mentioned below. The amount of flame proofing agents is in general 30 to 200 parts by weight, based on 100 parts by weight of the α-olefin-vinyl acetate copolymer. Good compatibility of the α-olefin-vinyl acetate copolymers with the flame proofing agents is therefore important.

The grafted α-olefin-vinyl acetate copolymer according to the invention, containing crosslinkable silyl groups, can be used alone or in the form of mixtures with one or more further polymeric materials. The polymeric materials may be thermoplastic and/or elastomeric materials. For example, it is possible to use a mixture which, in addition to the grafted α-olefin-vinyl acetate copolymer according to the invention, containing crosslinkable silyl groups, contains one or more α-olefin-(meth)acrylate copolymers, one or more ethylene-octene copolymers and/or polyethylene, in particular LDPE, suitable α-olefin-(meth)acrylate copolymers, ethylene-octene copolymers and polyethylene, in particular LDPE, being known to the person skilled in the art. Preferred α-olefin-(meth)acrylate copolymers are ethylene-acrylate and ethylene-methacrylate copolymers. Suitable (meth)acrylates which can be used for the preparation of the α-olefin-(meth)acrylate copolymers are esters of (meth)acrylic acid with linear or branched C₁-C₈-alcohols. Examples of suitable esters are methyl(meth)acrylate, n-butyl(meth)acrylate, (2-ethylhexyl) (meth)acrylate or tert-butyl (meth)acrylate. n-Butyl(meth)acrylate is particularly preferred.

The α-olefin-(meth)acrylate copolymers, preferably ethylene-(meth)acrylate copolymers, contain in general 1 to 30 mol%, preferably 2 to 20 mol% of (meth)acrylate as comonomers incorporated in (meth)actylate, n-Butyl(meth)acrylate is particularly preferred.

The α-olefin-(meth)acrylate copolymers, preferably ethylene-(meth)acrylate copolymers, contain in general 1 to 30 mol%, preferably 2 to 20 mol% of (meth)acrylate as comonomers incorporated in the form of polymerized units. Furthermore, the α-olefin(meth)acrylate copolymers may contain 0 to 10 mol%, preferably 1 to 5 mol%, of further comonomers known to the person skilled in the art, e.g. acrylic acid or methacrylic acid, incorporated in the form of polymerized units. Furthermore, the α-olefin-(meth)acrylate copolymers contain one or more comonomers based on α-olefins, preferably ethylene, and incorporated in the form of polymerized units, in general 70 to 99 mol%, preferably 75 to 97 mol%, the total sum of the (meth)acrylate comonomers units, the optionally present further comonomer units and the α-olefin units may be 100 mol%.

The mixtures of the grafted α-olefin-vinyl acetate copolymers according to the invention and of the at least one α-olefin-(meth)acrylate copolymer, at least one ethylene-octene copolymer and/or polyethylene, in particular LDPE, contain in general 50 to 99% by weight, preferably 55 to 80% by weight, particularly preferably 60 to 70% by weight, of the at least one grafted α-olefin-vinyl acetate copolymer and 1 to 50% by weight, preferably 20 to 45% by weight, particularly preferably 30 to 40% by weight, of the at least one α-olefin-(meth)acrylate copolymer, at least one ethylene-octene copolymer and/or polyethylene, in particular LDPE, the total sum of said components being 100% by weight. For example, the at least one grafted α-olefin-vinyl acetate copolymer and the at least one α-olefin-(meth)acrylate copolymer, the at least one ethylene-octene copolymer and/or polyethylene, in particular LDPE, may be present in the following weight ratios, the total sum being 100% by weight: 50:50; 65:35 or 75:25.

An advantage of the abovementioned mixtures containing the at least one grafted α-olefin-vinyl acetate copolymer and at least one α-olefin-(meth)acrylate copolymer is that simultaneous crosslinking of the components of the mixture with a single crosslinking system can take place. Suitable crosslinking systems are mentioned below.

### b) At least one unsaturated silane which contains at least one hydrolysable group and which is grafted on to the component A, as component B

The unsaturated silane which is used as component B and contains at least one hydrolysable group preferably has the following formula:

(R³)₂C=C(R³)-Xₙ-Si(R¹)ₘ(OR²)₍₃₋ₘ₎ (I)

in which:
- R¹: independently of one another, denote linear or branched C₁-C₄-alkyl,
- R²: independently of one another, denote linear, branched or cyclic C₁-C₈-alkyl, preferably methyl, ethyl, n-propyl or isopropyl,
- X: denotes -(CR⁴₂)ₒ-, -O(O)C(CR⁴₂)ₚ-, -C(O)O-(CR⁴₂)_{q}-, preferably -CH₂-, -(CH₂)₂-, -(CH₂)₃-, -O(O)C(CH₂)₃-, -C(O)O-(CH₂)₃, -C(O)-O-CH₂-, -O(O)CCH₂-, -C(O)-O-(CH₂)₂-, -O(O)C(CH₂)₂-, particularly preferably -C(O)-O-CH₂-,
- R³: independently of one another, denote hydrogen, C₁-C₃₋alkyl, preferably methyl, aryl, preferably phenyl, or aralkyl,
- n: denotes 0 or 1, preferably 0,
- m: denotes 0, 1 or 2, preferably 0,
- R⁴: independently of one another, denote hydrogen, linear or branched C₁-C₄-alkyl, e.g. methyl or ethyl, preferably hydrogen,
- o: denotes 1, 2, 3 or 4, preferably 1, 2 or 3,
- p: denotes 1, 2 or 3,
vinyltriethoxysilane, 3-methacryloyloxymethyltrimethoxysilane, 3-methacryloyloxymethyltriethoxysilane, 3-methacryloyloxypropyltriethoxysilane, 3-methacryloyloxypropyltrimethoxysilane, vinyltriacetoxysilane, vinylethoxydimethoxysilane, allyltrimethoxysilane, vinyltris(2-methoxyethoxy)silane, allyltriethoxysilane, vinylmethyldimethoxysilane, allylmethyldimethoxysilane, vinylmethyldiethoxysilane, allylmethyldiethoxysilane, vinylmethyldibutoxysilane and mixtures thereof. Vinyltrimethoxysilane, vinyltriethoxysilane, 3-methacryloyloxymethyltrimethoxysilane, 3-methacryloyloxypropyltrimethoxysilane or mixtures thereof are particularly preferably used as component B. The abovementioned silanes are commercially available. Methacryloyloxymethyltrimethoxysilane - a so-called alpha-silane - is obtainable, for example, under the trade name Geniosil® XL33 from Wacker Silicones.

Methacryloyloxypropyltrimethoxysilane - a so-called gamma-silane - is obtainable, for example, under the trade name Geniosil® GF31 from Wacker Silicones.

In an embodiment of the present invention, so-called alpha-silanes in which a methylene group is present between the Si atom and the functional group (R³)₂C=(CR³)- are used as unsaturated silanes which contain at least one hydrolysable group. As a result, particularly good crosslinking of the α-olefin-vinyl acetate copolymers according to the invention which contain crosslinkable silyl groups can be effected via more than one crosslinking site.

The at least one unsaturated silane which is used as component B and contains at least one hydrolysable group is used for the preparation of the grafted α-olefin-vinyl acetate copolymers according to the invention in an amount of 1 to 10 parts by weight, particularly 5 to 10 parts by weight, based on 100 parts by weight of the α-olefin-vinyl acetate copolymer used (component A).

### Grafting of the at least one unsaturated silane which is used as component B and contains at least on hydrolysable group on to the component A

The grafted α-olefin-vinyl acetate copolymer according to the invention is obtained either by grafting an α-olefin-vinyl acetate copolymer which has a vinyl acetate content of ≥ 60% by weight (based on the total mass of the α-olefin-vinyl acetate copolymer of 100% by weight) (component A1) (Embodiment 1) or by grafting a mixture of α-olefin-vinyl acetate copolymers, which was mentioned above with regard to the component A (Embodiment 2), with at least one unsaturated silane which contains at least one hydrolysable group (component B).

The grafting of the at least one α-olefin-vinyl acetate copolymer used as component A and thus the preparation of the grafted α-olefin-vinyl acetate copolymers according to the invention can be effected according to processes known to the person skilled in the art. Usually, the grafting of the at least one α-olefin-vinyl acetate copolymer used as component A with the at least one unsaturated silane which contains at least one hydrolysable group is effected in the presence of a free radical initiator.
The present invention therefore furthermore relates to a process for the preparation of the grafted α-olefin-vinyl acetate copolymer according to the invention by reacting one or more α-olefin-vinyl acetate copolymers as component A with at least one unsaturated silane which contains at least one hydrolysable group, as component B, in the presence of a free radical initiator.
Suitable free radical initiators are the free radical initiators usually used for grafting unsaturated silanes on to ethylene(co)polymers. Suitable initiators are compounds which are capable of producing free radical sites in the α-olefin-vinyl acetate copolymers under the reaction conditions suitable for grafting. These initiators preferably have a half-life of less than 6 minutes, preferably less than 1 minute, at the reaction temperature of the grafting. Particularly suitable initiators are organic peroxides and peresters, e.g. benzoyl peroxide, dichlorobenzoyl peroxide, dicumyl peroxide (DCP), di-tert-butyl peroxide, 1,1-di(tert-butylperoxy)-3,3,5-trimethylcyclohexane (obtainable under the trade name Trigonox® 29-B50 from Akzo Nobel), 2,5-dimethyl-2,5-di(peroxybenzoate)hex-3-yne, 1,3-bis(tert-butylperoxyisopropyl)benzene, lauroyl peroxide, tert-butyl peracetate, 2 , 5-dimethyl-2,5-di(tert-butylperoxy)hex-3-yne, 2,5-dimethyl-2,5-di(tert-butylperoxy)hexane and tert-butyl perbenzoate and mixtures thereof, preferably dicumyl peroxide or 1,1-di(tert-butylperoxy)-3,3,5-trimethylcyclohexane, and azo compounds, e.g. azobisisobutyronitrile, dimethyl azodiisobutyrate and mixtures thereof. Preferably used initiators are peroxides, dicumyl peroxide (DCP) and 1,1-di(tert-butylperoxy)-3,3,5-trimethylcyclohexane being very particularly preferred.
The amount of initiator used is dependent on the degree of grafting chosen and the initiator used. In general, the initiator is used in an amount of 0.01 to 2 parts by weight, preferably 0.5 to 1.5 parts by weight, particularly preferably 0.8 to 1.0 part by weight, based on 100 parts by weight of the component A.
The preparation of the grafted α-olefin-vinyl acetate copolymer according to the invention is effected in general by reacting the component A with the component B in the presence of at least one radical initiator at temperatures of 20°C to 190°C, preferably 50 to 180°C, particularly preferably 60 to 170°C. Suitable radical initiators are mentioned above.

The grafting can be carried out in any suitable apparatus known to the person skilled in the art. The grafting is preferably effected in an extruder, an internal mixer (Banbury internal mixer) or in a roll mill. Particularly preferably, an extruder is used, e.g. a single-screw or twin-screw extruder, a twin-screw extruder being very particularly preferred. In a very particularly preferred embodiment, the grafting is therefore effected by means of reactive extrusion.

To carry out the grafting, the components A and B can be mixed with one another by any method known to the person skilled in the art. For example, the component A can be initially introduced and the components B and the free radical initiator can be added in succession or together. Furthermore, it is also possible to mix the component A with the component B and then to add the free radical initiator. It is furthermore possible to add the components A and B and the free radical initiator simultaneously. It is also possible to add initiator or silane gradually instead of adding the total amount of the free radical initiator and/or of the silane at the beginning of the process.

The grafting can be carried out continuously, batchwise or semicontinuously; the grafting is preferably effected continuously.

In one embodiment, the component B can be added as a liquid component. If permitted by the solubility conditions, it is furthermore possible to add the free radical initiator in solution in the liquid component.

The grafting is generally effected over a period of 0.1 to 15 minutes, preferably 0.5 to 6 minutes.

The grafting yield i.e. the ratio of the amount of grafted monomer to the total amount of the monomers used times 100, is dependent, inter alia, on the ratio of the unsaturated silane to the initiator used and is in general 30 to 85%, preferably 50 to 75%. The silane content in the grafted polymer, calculated as Si, is in general 0.8 to 4% by weight, preferably 1.2 to 3.6% by weight, particularly preferably 1.5 to 2.5% by weight.

In principle it is possible to add small amounts of organic solvents, for example for facilitating the addition of the component B and/or the addition of the free radical initiator. In a preferred embodiment, however, the grafting is carried out in the absence of organic solvents.
Furthermore, the mixture used in the graft reaction and containing the components A and B and at least one free radical initiator may additionally contain grafting auxiliaries and/or processing auxiliaries. Suitable grafting and processing auxiliaries are known to the person skilled in the art. For example, grafting and processing auxiliaries of stearic acid (e.g. Edenor® C 18 98-100 from Cognis), stearates, e.g. Ca stearate, primary fatty acid amines, e.g. octadecylamine (e.g. Armeen® 18D from Akzo Nobel or Aflux® 18 from Rhein-Chemie), triphenyl phosphite, zinc dialkylthiophosphate (e.g. Rhenogram ZDDT-50 from Rhein-Chemie), cumene, N,N-dimethylaniline, 4-nonene, 1-dodecene; buffer systems, such as MgO, antioxidants, such as phenolic antioxidants, e.g. antioxidants of the Irganox® series from Ciba, and silicone-based additives, e.g. a combination of high-viscosity silicone gum and a silicic acid (silica), as are sold, for example, under the trade name Genioplast® by Wacker Silicones, can be used. The grafting and/or processing auxiliaries are used in general in each case in an amount of 0.5 to 4 phr, preferably 1 to 3 phr (phr = parts per hundred of rubber, i.e. based on 100 parts by weight of the component A).
In addition, the mixture used for the grafting reaction may contain further components, such as fillers, e.g. magnesium carbonate, in particular fillers having flame proofing properties, which are mentioned below.

### Crosslinking of the grafted α-olefin-vinyl acetate copolymers according to the invention

The grafted α-olefin-vinyl acetate copolymers according to the invention can be crosslinked by the influence of water by the process known to the person skilled in the art. The crosslinking is preferably effected in the presence of at least one crosslinking catalyst. Suitable crosslinking catalysts (catalysts of the crosslinking) are known to the person skilled in the art. For example, metal carboxylates, such as dibutyltin laurate, stannoacetate, stannooctanoate, lead naphthenate, zinc octanoate, iron 2-ethylhexanoate and cobalt naphthenate, organic metal compounds, such as titanic esters and titanium chelates, e.g. tetrabutyl titanate, tetranonyl titanate and bis(acetylacetonyl)diisopropyl titanate, organic bases, such as ethylamine, hexylamine, dibutylamine, and piperidine, and acids, such as mineral acids and fatty acids, and mixtures thereof can be used as crosslinking catalysts. Preferred crosslinking catalysts are organic tin compounds, for example dibutyltin laurate, dibutyltin diacetate and dibutyltin dioctanoate.

In the context of the present application, the water may be present in the form of moisture present in the atmosphere, in the form of an atmosphere additionally artificially moistened, in the form of steam and/or as liquid water.

Crosslinking can be carried out by exposing the grafted α-olefin-vinyl acetate copolymer according to the invention to a humid atmosphere or immersing said copolymer in liquid water.

The crosslinking is generally effected at temperatures of 20°C to 90°C, preferably 40 to 90°C, particularly preferably 60 to 90°C, very particularly preferably 60 to 85°C.

The crosslinking can be effected, for example, in a condition chamber at the abovementioned temperatures and at atmospheric humidity of 60 to 100%, preferably 70 to 90%.

The crosslinking of the grafted α-olefin-vinyl acetate copolymers according to the invention which have crosslinkable silyl groups can be effected - as an alternative to crosslinking with water optionally in the presence of a crosslinking catalyst - by any process known to the person skilled in the art. For example, di- or polyfunctional crosslinking reagents (crosslinkers) which are reactive with -OH groups formed during the crosslinking from the hydrolysable alkoxy groups of the silyl groups of the grafted α-olefin-vinyl acetate copolymer according to the invention can be used. Suitable groups which are reactive with the -OH groups are, for example, hydroxyl, amino, epoxy, isocyanate, ester, amido and aziridino groups. Examples of such crosslinkers are ethylene glycol, diethylene glycol, triethylene glycol, tetraethylene glycol, polyethylene glycol, glycerol, polyglycerol, triethanolamine, propylene glycol, polypropylene glycol, block copolymers of ethylene oxide and propylene oxide, ethanolamine, sorbitan fatty acid esters, ethoxylated sorbitan fatty acid esters, trimethylolpropane, pentaerythritol, 1,3-butanediol, 1,4-butanediol, polyvinyl alcohol, sorbitol, starch, polyglycidyl ethers, such as ethylene glycol diglycidyl ether, polyethylene glycol diglycidyl ether, glyceryl diglycidyl ether, glyceryl polyglydicyl ether, diglyceryl polyglycidyl ether, polyglyceryl polyglycidyl ether, sorbitol polyglycidyl ether, pentaerythrityl polyglycidyl ether, propylene glycol diglycidyl ether and polypropylene glycol diglycidyl ether, polyaziridine compounds, such as 2,2-bishydroxymethylbutanol tris[3-(1-aziridinyl)propionate], 1,6-hexamethylenediethylene urea, diphenylmethane bis-4,4'-N,N'-diethylene urea, halogen-epoxy compounds, such as epichlorohydrin and alpha-methylepifluorohydrin, polyisocyanates, such as 2,4-toluylene diisocyanate, hexamethylenediamine carbonate (DIAK) and hexamethylene diisocyanate, alkylene carbonates, such as 1,3-dioxolan-2-one and 4-methyl-1,3-dioxolan-2-one, and furthermore bisoxazolines and oxazolidones, polyamidoamines and the reaction products thereof with epichlorohydrin, and furthermore polyquaternary amines, such as condensates of dimethylamine with epichlorohydrin, homo- and copolymers of diallyldimethylammonium chloride and homo- and copolymers of dimethylaminoethyl (meth)acrylate, which are optionally quaternized with, for example, methylene chloride.

Hexamethylenediamine carbamate (DIAK) and ethylene glycol are particularly suitable.

The crosslinkers are generally used together with crosslinking accelerators known to the person skilled in the art. A suitable crosslinking system comprising crosslinker and accelerator is, for example, hexamethylenediamine carbamate (DIAK), which is preferably used with at least one crosslinking accelerator, e.g. guanidine crosslinking accelerators, such as 3-di-o-tolylguanidine (DOTG), or strong bicyclic bases, such as 1,8-diazabicyclo-5,4,0-undec-7-ene, e.g. Rhenogran®XLA-60 (GE-2014).

The present invention therefore furthermore relates to a crosslinkable composition containing
i) at least one grafted α-olefin-vinyl acetate copolymer according to the invention as component I, and
ii) optionally at least one catalyst for the crosslinking of the crosslinkable silyl groups present in component I.

Suitable catalysts for the crosslinking (crosslinking catalysts) are mentioned above. Suitable grafted α-olefin-vinyl acetate copolymers according to the invention are likewise mentioned above.

The crosslinking catalyst is present in the crosslinkable compositions according to the invention in general in an amount of 0 to 3.5 parts by weight, preferably 0.5 to 3 parts by weight, particularly preferably 0.7 to 1.2 parts by weight, based on 100 parts by weight of the component I.

The compositions according to the invention are halogen-free flame-retardant (HFFR), polymeric materials which can be processed to give articles for which the fire safety is of importance. They are suitable in particular for the production of insulation or sheath materials for cables or lines. The advantageous properties which are achieved with the use of the crosslinkable composition according to the invention have already been mentioned above. To be singled out in particular is the resistance of articles, in particular insulation or sheath materials for cables or lines, which contain the crosslinkable compositions according to the invention, to organic hydrocarbons, e.g. oil or fuel, and good compatibility with polar fillers, a balanced property profile, in particular good flexibility and hardness, being present even in the case of high filler contents.

The crosslinking of the crosslinkable compositions according to the invention can - as mentioned above - be effected by any processes known to the person skilled in the art. In a preferred embodiment, according to the invention, crosslinking is effected with water, optionally in the presence of a crosslinking catalyst. For the preparation of crosslinked compositions starting from the crosslinkable compositions according to the invention, the crosslinkable compositions are brought into contact with water. The present invention therefore furthermore relates to a process for the crosslinking of the crosslinkable compositions according to the invention, comprising bringing the crosslinkable compositions into contact with water. Suitable forms of "water" are described above.

Usually, the crosslinking of the crosslinkable compositions according to the invention is effected by a procedure in which the crosslinkable composition according to the invention, which usually optionally contains at least one catalyst for crosslinking in addition to the at least one grafted α-olefin-vinyl acetate copolymer according to the invention (as component I), is exposed to the action of water, usually after shaping by extrusion or other suitable measures - optionally with addition of a crosslinking catalyst. In a preferred embodiment, the crosslinking catalyst is added only immediately before or during the crosslinking to the grafted α-olefin-vinyl acetate copolymer according to the invention.

In the production of cables and lines, in particular two processes are known in the prior art, which can be used according to the invention. The first process, which has become known by the designation Sioplas and is described in US 3,646,155, relates to a process in which, in a first stage, a polymer - according to the present application at least one α-olefin-vinyl acetate copolymer as component A, which contains a component A1, the components A and A1 being defined above - is reacted in the presence of a free radical initiator with an unsaturated silane which contains at least one hydrolysable group (component B according to the present application). Suitable components B are mentioned above. A grafted copolymer - according to the present application, the grafted α-olefin-vinyl acetate copolymer according to the invention - which has hydrolysable silane groups in the side chains forms in the process. In a second stage, the hydrolysable silane groups of the grafted polymer are hydrolysed by the action of water, and the silanol groups formed are condensed under the influence of the at least one catalyst for crosslinking. The catalyst for crosslinking can be added before, during or after the grafting reaction. In an embodiment of the present invention, the catalyst for crosslinking is preferably added to the grafted α-olefin-vinyl acetate copolymer according to the invention immediately before the shaping, advantageously in the form of the crosslinkable composition according to the invention and according to the present application, the catalyst for crosslinking of the grafted α-olefin-vinyl acetate copolymer according to the invention (as component I) preferably being homogenized with component I. The crosslinkable composition according to the invention serves as a masterbatch. The advantage of this procedure is that the preparation of the grafted α-olefin-vinyl acetate copolymer according to the invention can be effected on the premises of the raw material producer and the mixing with the catalyst for crosslinking can be effected on the premises of the producer of the mouldings, preferably of the cables and lines.
The second process known in the prior art is the Monosil process. This substantially corresponds to the abovementioned Sioplas process, although the catalyst for crosslinking is added during the grafting reaction itself and the crosslinkable composition according to the invention which is thus obtained is shaped into a moulding and crosslinked immediately thereafter. This process is generally carried out completely on the premises of the producer of the mouldings.
In the context of the present invention, mouldings are preferably to be understood as meaning cables and lines.
Suitable lines are usually composed of a conductor (wire) and an electrical insulation. Optionally, the conductors may also have an outer layer as a protective covering in addition to the electrical insulation. Suitable cables in the context of the present invention are a group of conductors which are covered with a sheath material (as covering layer).

The process for coating a wire comprises the steps:
(a) extrusion of a mixture containing one or more α-olefin-vinyl acetate copolymers as component A, of which at least one, as component A1, has a vinyl acetate content of ≥ 60% by weight, based on the total weight of the α-olefin-vinyl acetate copolymer A1, and at least one unsaturated silane which has at least one hydrolysable group, as component B, in the presence of a wire, a coating being obtained on the wire, and
(b) crosslinking of the coating on the wire by bringing the coated wire into contact with water, preferably in the presence of a crosslinking catalyst.

Suitable reaction conditions for the grafting step (a) and for the crosslinking step (b) and suitable compounds are the abovementioned reaction conditions and compounds.

### Further components

The crosslinkable composition according to the present invention may optionally contain further components which are known to the person skilled in the art, in addition to the component I and optionally the at least one catalyst for crosslinking the component I. Examples of further suitable components are fillers which have flame-retardant properties and auxiliaries and additives, such as substances which can further improve the flame retardancy of the compositions according to the invention, antioxidants, metal deactivators, flame-retardant auxiliaries, further fillers and lubricants, processing auxiliaries or pigments.

Suitable fillers having flame proofing properties are preferably halogen-free flame proofing agents - since the compositions according to the present invention are halogen-free. The halogen-free flame proofing agent is preferably an inorganic flame proofing agent. Suitable inorganic flame proofing agents are known to the person skilled in the art. Preferred inorganic flame proofing agents are aluminium hydroxide (also referred to as aluminium trioxide hydrate (ATH)), magnesium hydroxide (MDH), magnesium carbonate and/or sodium aluminium hydroxycarbonate and hydrotalcite.

Aluminium hydroxide (ATH), magnesium hydroxide (MDH) and/or magnesium carbonate are particularly preferably used in the crosslinkable compositions according to the invention, very particularly preferably aluminium hydroxide (ATH) and/or magnesium hydroxide (MDH). Suitable flame proofing agents are known to the person skilled in the art and are usually commercially available. The abovementioned preferably used flame proofing agents aluminium hydroxide and magnesium hydroxide can be used in untreated form, as they are generally commercially available, or can be subjected to a surface treatment. Examples of surface treatment comprise a treatment with a fatty acid, a treatment with phosphoric acid, a treatment with titanate or a treatment with a silane coupling agent, e.g. a silane which has a terminal vinyl group, a methacryloyloxy group, a glycidyl group or an amino group. The surface treatment of the aluminium hydroxide or magnesium hydroxide can be carried out, for example, by mixing the aluminium hydroxide or magnesium hydroxide with a corresponding treatment agent by methods known to the person skilled in the art. Magnesium hydroxides treated with silane coupling agents are commercially available, for example, under the trade names Kisuma 5L, Kisuma 5N and Kisuma 5P from Kyowa Chemical Industry Company, Ltd., or Finemag MO-E from TMG Corporation and Magnefin® H5A from Albemarle and Apymag® AOH 60 VS 1 from Nabaltec.

Suitable (untreated) aluminium hydroxide (ATH) is, for example, aluminium hydroxide which is obtainable under the trade name Apyral®40CD from Nabaltec. Suitable magnesium carbonate is obtainable, for example, under the trade name Magfy® from Nuovasima.

The specific surface area (BET surface area) of the filler is in general < 50 m²/g, preferably 1 to 40 m²/g. The specific surface area of aluminium hydroxide (ATH) is particularly preferably 3 to 12 m²/g and the specific surface area of magnesium hydroxide (MDH) is particularly preferably 4 to 12 m²/g.

Substances which can further improve the flame retardancy of the compositions according to the invention are, for example, melamine cyanurate compounds, which are obtainable, for example, under the trade names MCA-0 and MCA-1 from Mitsubishi Chemical, Corp. or under the trade names MC640 and MC610 from Nissan Chemical Industries, Ltd., zinc stannate, zinc hydrostannate or zinc borate, zinc borate being obtainable, for example, under the trade names Alcanex FRC-500 (2ZnO/3B₂O₃-3,5H₂O) and FRC-600 from Mizusawa Industrial Chemicals, Ltd., and zinc stannate (ZnSnO₃) and zinc hydrostannate (ZnSn(OH)₆), for example, under the trade names Alcanex ZS and Alcanex ZHS from Mizusawa Industrial Chemicals, Ltd.

Suitable antioxidants are, for example, antioxidants of the amine series, such as 4,4'-dioctyldiphenylamine, N,N'-diphenyl-p-phenylenediamine, 2,2,4-trimethyl-1,2-dihydroquinoline polymer; antioxidants of the phenol series, such as pentaerythrityl tetrakis(3-(3,5-di-t-butyl-4-hydroxyphenyl)propionate), octadecyl-3-(3,5-di-t-butyl-4-hydroxyphenyl)propionate, 1,3,5-trimethyl-2,4,6-tris(3,5-di-t-butyl-4-hydroxybenzyl)benzene; antioxidants of the sulphur series, such as bis(2-methyl-4-(3-n-alkylthiopropionyloxy)-5-t-butylphenyl) sulphite, 2-mercaptobenzimidazole and zinc salts thereof, and pentaerythrityl tetrakis(3-dodecylthiopropionate).

Examples of suitable metal deactivators are N,N'-bis(3-(3,5-di-t-butyl-4-hydroxyphenyl)-propionyl)hydrazine, 3-(N-salicyloyl)amino-1,2,4-triazole, 2,2'-oxamide bis(ethyl-3-(3,5-di-t-butyl-4-hydroxyphenyl)propionate).

Examples of flame-retardant auxiliaries and fillers are carbon black, clay, zinc oxide, tin oxide, titanium oxide, magnesium oxide, molybdenum oxide, antimon(III) oxide, silicon compounds, quartz, talc, calcium carbonate, magnesium carbonate and white carbon. In a preferred embodiment, the compositions according to the invention contain calcium carbonate as component F in addition to the components A to E. In the compositions according to the invention, the calcium carbonate used may be, for example, finely divided calcium carbonate, which is obtainable, for example, under the trade name Mikrosöhl® from VK Damman KG.

Examples of suitable lubricants are lubricants of the hydrocarbon series, of the fatty acid series, of the fatty acid amide series, of the ester series, of the alcohol series and of the metal soap series, lubricants of the ester series, the alcohol series and the metal soap series being preferred. Furthermore, zinc stearate, stearic acid and magnesium stearate and fatty acid amides are suitable as lubricants.

In addition, the compositions according to the invention may contain polysiloxanes, in particular polydimethylsiloxane, as processing auxiliaries. For example, suitable polydimethylsiloxanes are obtainable under the trade name Genioplast®SP from Wacker. This is a polydimethylsiloxane PDMS masterbatch. Further processing auxiliaries which can be used in the crosslinkable compositions according to the invention are, for example, calcium stearate, zinc stearate, stearic acid, paraffin wax, silicone rubber and mixtures thereof.

Suitable pigments are known to the person skilled in the art and are commercially available.

The present invention therefore furthermore relates to the crosslinkable compositions according to the invention, containing
i) at least one grafted α-olefin-vinyl acetate copolymer according to the invention as Suitable pigments are known two the person skilled in the art and are commercially available.

The crosslinkable compositions contain the following components:
i) 100 parts by weight of at least one grafted α-olefin-vinyl acetate copolymer according to the invention as component I, and
ii) 0 to 10 parts by weight, preferably 0.01 to 10 parts by weight, particularly preferably 0.02 to 5 parts by weight, based on 100 parts by weight of the component I, of at least one catalyst for crosslinking of the crosslinkable silyl groups present in component I, and
iii) 60 to 200 parts by weight, preferably 90 to 150 parts by weight, based on 100 parts by weight of the component I, of at least one filler having flame-retardant properties.

Suitable components I, catalysts for crosslinking and fillers having flame-retardant properties are mentioned above.

The crosslinkable compositions according to the invention or the crosslinked compositions according to the invention can be processed to give articles for which the fire safety is of importance. They are preferably used for the production of insulation of sheath materials for cables and lines.

The present invention therefore furthermore relates to insulation or sheath materials for cables or lines, containing a crosslinked composition according to the invention, and cables and lines which contain a crosslinked composition according to the invention. Suitable lines are usually composed of a conductor (wire) and of electrical insulation. In addition to the electrical insulation, the conductor can additionally also have an outer layer as a protective covering. In the context of the present invention, suitable cables comprise a group of conductors which are covered with a sheath material (covering layer).

The crosslinked composition according to the invention can be used either as electrical insulation or as sheath material (covering layer) in the form of a second layer in a conductor or in the form of a covering layer in a cable. It is also possible to use the crosslinked compositions according to the invention in any of these layers. The crosslinked compositions according to the invention are preferably used as sheath materials (covering layer).

The thickness of the layers (insulation or sheath) formed from the compositions according to the invention around a conductor (wire) or a group of conductors is in general not limited. Preferred thickness are, for example, 0.3 to 3 mm.

Suitable materials for conductors (wires) used in the cables or lines according to the invention are in general copper or aluminium or, in special cases, also superconductors, copper being particularly preferred.

Suitable materials which - where no crosslinked composition according to the invention is used - are used as insulation materials or sheath materials are known to the person skilled in the art.

The following examples additionally explain the invention.

### Examples

All the quantity data in the compositions mentioned below are based on 100 parts by weight of the rubber mixture mentioned in each case and are stated in phr (parts per hundred of rubber).

### A Mixtures containing a plurality of olefin-vinyl acetate copolymers as component A, of which at least one, as component A1, has a vinyl acetate content of ≥ 60% by weight, based on the total weight of the α-olefin-vinyl acetate copolymer A1; and at least one unsaturated silane

### A1 Compositions suitable for grafting with unsaturated silane

In Table 1, compositions which are suitable for grafting unsaturated silane and contain a plurality of olefin-vinyl acetate copolymers are mentioned in Examples 1 and 2. The total vinyl acetate content of the mixtures is 60.20% by weight in Example 1 and 68.80% by weight in Example 2. The preparation of the compositions according to Examples 1 and 2 is effected by mixing of the components mentioned in Table 1.

**Table 1:**

| **Composition** | | **1** | **2** |
|---|---|---|---|
| ESCORENE ® UL 00328 (EVA 29wt% vinyl acetate content) | | 15 | 20 |
| Levapren® 500 HV (EVM 50wt% vinyl acetate content) | | 40 | |
| Levapren® 600 HV (EVM 60wt% vinyl acetate content) | | | 30 |
| Levapren® 800 HV (EVM 80wt% vinyl acetate content) | | 45 | |
| Levapren® 900 HV (FVM 90wt% vinyl acetate content) | | | 50 |
| Vinyl acetate content of compound | | **60.20%** | **68.80%** |
| Total | (phr) | 100 | 100 |
| Density | (g/cm³) | 1.038 | 1.067 |

Table 2 shows the Mooney viscosities of the compositions according to Examples 1 and 2, determined according to ASTM D 1646.

**Table 2: Mooney viscosity ML 1+4 at 100°C (ASTM D 1646)**

| **Mooney viscosity (ASTM D 1646)** | | **1** | **2** |
|---|---|---|---|
| ML1+4/100°C | (MU) | 21 | 22 |
| Rel. after 10 sec. | (%) | 12.85 | 11.46 |
| Rel. after 20 sec. | (%) | 8.09 | 6.87 |
| Rel. after 30 sec. | (%) | 618 | 5 04 |
| MSR slope | (MU/s) | 0.597 | 0.638 |

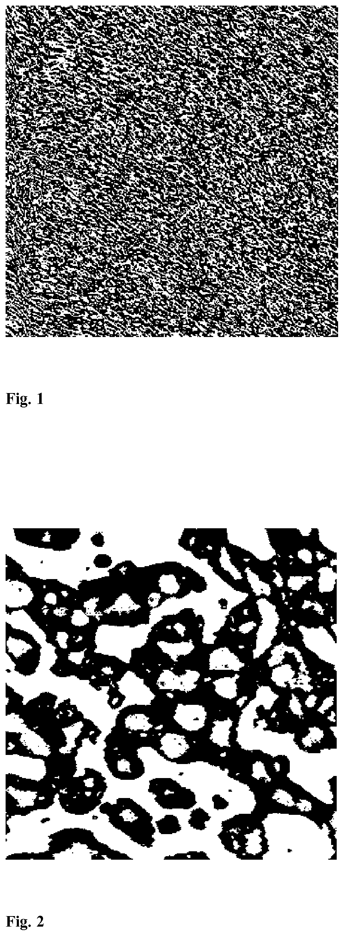

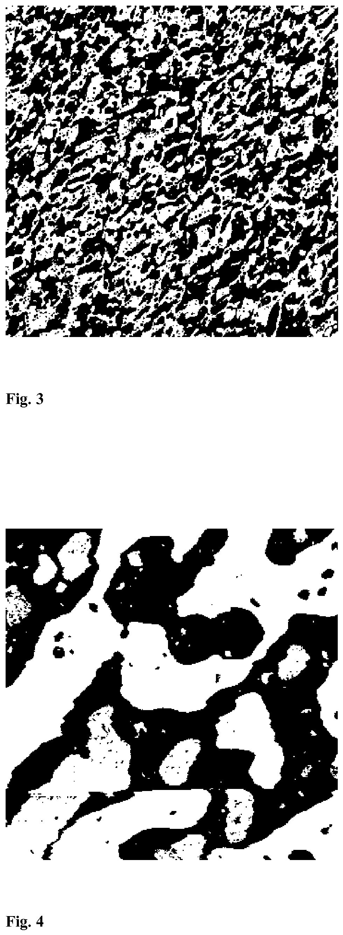

Figures 1, 2, 3 and 4 show AFM micrographs of the compositions according to Examples 1 and 2.
**Fig. 1** shows an AFM micrograph of the composition according to Example 1, recorded at a resolution of 40 µm, [15 phr (EVA 28%)]/[40 phr (EVM 50%)]/[45 phr (EVM 80%)], altogether VA content of 60.2%.
**Fig. 2** shows an AFM micrograph of the composition according to Example 1, recorded at a resolution of 2.5 µm, [15 phr (EVA 28%)]/[40 phr (EVM 50%)]/[45 phr (EVM 80%)], altogether VA content of 60.2%.
**Fig. 3** shows an AFM micrograph of the composition according to Example 2, recorded at a resolution of 40 µm, [20 phr (EVA 28%)]/[30 phr (EVM 60%)]/[50 phr (EVM 90%)], altogether VA content of 68.8%.
**Fig. 4** shows an AFM micrograph of the composition according to Example 2, recorded at a resolution of 2.5 µm, [20 phr (EVA 28%)]/[30 phr (EVM 60%)]/[50 phr (EVM 90%)], altogether VA content of 68.8%.

### A2 Grafting of the composition according to Example 1 with unsaturated silane

Table 3 shows a composition (Example 3) provided for grafting with unsaturated silane and based on the composition according to Example 1 in Table 1.

**Table 3:**

| **Composition** | | **3** |
|---|---|---|
| ESCORENE® UL 00328 (EVA 28wt% vinyl acetate content) | | 15 |
| LEVAPREN® 500 HV (EVM rubber 50%wt vinyl acetate content) | | 40 |
| LEVAPREN® 800 HV (EVM rubber 80%wt vinyl acetate content) | | 45 |
| DYNASYLAN® VTMO (vinyl trimethoxysilane) | | 10 |
| PERKADOX® BC-40 B-PD (dicumyl peroxide 40% active) | | 1 |
| MAGLITE® DE (magnesium oxide MgO) | | 4 |
| TRIPHENYLPHOSPHITE | | 1 |
| EDENOR® C 18 98-100 (stearic acid) | | 3 |
| AFLUX® 18 (GE 1855) (octadecylamine) | | 1 |
| Total | (phr) | 120 |
| Density | (g/cm³) | 1.05 |

The processing conditions (extrusion conditions) for grafting the compositions according to Example 1 with unsaturated silane are shown in Table 4. The grafting is effected in a Berstorff ZE-25 twin-screw extruder with the temperature profiles stated in Table 4 by means of reactive extrusion (Examples 3A and 3B).

**Table 4:**

| | **Screw speed** | **Barrel temperature zones [°C]** | | | | | | | | | | **Throughput** | **Head pressure** | **Melt temp.** |
|---|---|---|---|---|---|---|---|---|---|---|---|---|---|---|
| **N°** | **RPM** | **1** | **2** | **3** | **4** | **5** | **6** | **7** | **8** | **9** | **10** | [**Kg/h**] | **bar** | [**°C**] |
| 3A | 100 | 70 | 170 | 160 | 155 | 150 | 150 | 155 | 160 | 155 | 150 | 2.4 | 43 | **168** |
| 3B | 100 | 70 | 180 | 170 | 160 | 160 | 155 | 155 | 160 | 165 | 160 | 2.4 | 53 | **178** |

### A3 Crosslinking of the compositions according to Examples 3A and 3B

Table 5 shows, in Examples 4A1, 4A2, 4B1 and 4B2, crosslinking systems for crosslinking of the compositions according to Examples 3A and 3B.

**Table 5**

| **Composition** | | **4A1** | **4B1** | **4A2** | **4B2** |
|---|---|---|---|---|---|
| 3A | | 120 | | 120 | |
| 3B | | | 120 | | 120 |
| DIAK® NO. 1 (hexamethylenediamine carbamate | | 2 | | | |
| RHENOGRAN® DOTG-70 (N'N di-o-tolylguanidine 70% active) | | 5.7 | | | |
| WATER | | | | | |
| DIBUTYL TIN DILAURATE (DBTL) | | | | | |
| Total | (PHR) | 127.7 | 127.7 | 126.0 | 126.0 |
| Density | (g/cm³) | 1.055 | 1.055 | 1.048 | 1.048 |

The crosslinking of the compositions according to Examples 4A1, 4A2, 4B1 and 4B2 is effected in a rheometer (MDR 2000 rheometer) at 170°C (Table 6) and 190°C (Table 7) in a period of 30 minutes with water and dibutyl tin dilaurate (DBTL) as a crosslinking system, the course of the crosslinking being monitored by measurement of the torque as a function of time (method: ASTM D 5289). Tables 6 and 7 show the course of the crosslinking on the basis of the torque as a function of time.

**Table 6**

| **MDR Rheometer 2000 at 170°C (ASTM D 5289)** | | **4A1** | **4B1** | **4A2** | **4B2** |
|---|---|---|---|---|---|
| MINIMUM | (S'dNm) | 2.65 | 2.93 | 2.59 | 2.48 |
| MAXIMUM | (S'dNm) | 4.32 | 4.32 | 4.74 | 4.29 |
| t10 | (sec) | 18 | 16 | 12 | 20 |
| t80 | (sec) | 97 | 97 | 106 | 216 |
| t90 | (sec) | 198 | 169 | 222 | 441 |

**Table 7**

| **MDR Rheometer 2000 at 190°C (ASTM D 5289)** | | **4A1** | **4B1** | **4A2** | **4B2** |
|---|---|---|---|---|---|
| MINIMUM | (S'dNm) | 2.57 | 2.12 | 2.25 | 2.07 |
| MAXIMUM | (S'dNm) | 4.25 | 4.50 | 4.51 | 4.15 |
| t10 | (sec) | 10 | 9 | 11 | 13 |
| t80 | (sec) | 52 | 34 | 58 | 105 |
| t90 | (sec) | 107 | 51 | 98 | 224 |

### A4 Cable composition based on the silane-grafted composition according to Example 3A

Table 8 shows an example (Example 5) for a cable mixture based on the composition according to Example 3A. The preparation of the uncrosslinked cable mixture is effected by mixing the components mentioned in Table 8.

**Table 8**

| **(Composition** | | **5** |
|---|---|---|
| **3A** | | 100 |
| APYMAG® AOH 60 VS1 (magnesium dihvdroxide BET= 6 m²/g) | | 100 |
| MAGFY® (magnesium carbonate) | | 50 |
| DIBUTYL TIN DILAURATE (DBTL) | | 1 |
| Total | (phr) | 251 |
| Density | (g/cm³) | 1.582 |

For the preparation of the crosslinked cable mixtures, the composition according to Example 5 is vulcanized (crosslinked) in a heating oven at 90°C and 85% atmospheric humidity for 8 hours. The mechanical properties and the LOI (ASTM D 2863) are stated in Table 9.

**Table 9**

| **Mechanical properties** | | **5** |
|---|---|---|
| Tensile strength ASTM D 412) | (MPa) | 9.8 |
| Elongation at break (ASTM D 412) | (%) | 158 |
| M 50 (ASTM D 412) | (MPa) | 6.0 |
| M 100 (ASTM D 412) | (MPa) | 6.8 |
| Hardness (ASTM D 2240) | (Shore A) | 85 |
| LOI (ASTM D 2863) | (%) | 32 |

### B Mixtures containing an olefin-vinyl acetate copolymer as component A1, which has a vinyl acetate content of ≥ 60% by weight, based on the total weight of the α-olefin-vinyl acetate copolymer A1, and at least one unsaturated silane

### B1 Grafting of olefin-vinyl acetate copolymers with unsaturated silane

Table 10 shows compositions provided for grafting with unsaturated silane and based on ethylene-vinyl acetate copolymers having a vinyl acetate content of 60% by weight and 80% by weight.

The processing conditions for grafting of the compositions according to Examples 6 and 7 with unsaturated silane are likewise shown in Table 10. The grafting is effected in a Coperion W&P ZSK 40 Sc twin-screw extruder unit by means of reactive extrusion with the extrusion parameters stated in Table 10 (Example 6 (60% by weight of vinyl acetate) and Example 7 (80% by weight of vinyl acetate)).

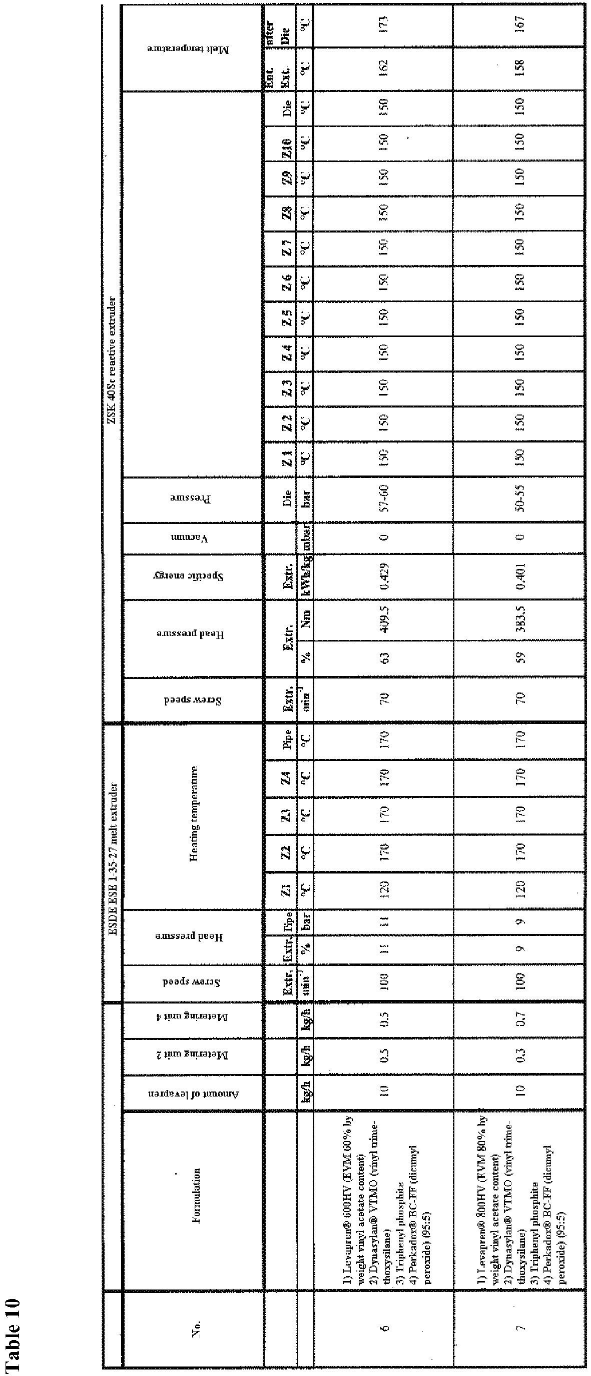

### B2 Crosslinking of the compositions according to Examples 6 and 7

The crosslinking of the compositions according to Examples 6 and 7 is effected in a rheometer (MDR 2000 rheometer) at 190°C in a period of 30 minutes with 5 phr of water and 1 phr of dibutyl tin dilaurate (DBTL) as a crosslinking system, the course of the crosslinking being monitored by measurement of the torque as a function of time (method: ASTM D 5289). Table 11 shows the course of the crosslinking on the basis of the torque as a function of time.

**Table 11**

| **Rheometer MDR 2000 (ASTM D 5289)** | | **6** | **7** |
|---|---|---|---|
| Minimum torque | [dNm] | 1.3 | 0.2 |
| Maximum torque | [dNm] | 21.5 | 11.8 |
| Final torque value | dNm | 21.5 | 11.8 |
| Delta S' | dNm | 20.3 | 11.6 |
| Increased time TS1 | **S** | 12.0 | 23.4 |
| Increased time TS2 | **S** | 28.8 | 40.8 |
| Conversion time 10% | **S** | 29.0 | 25.7 |
| Conversion time 80% | **S** | 555.8 | 591.4 |
| Conversion time 90% | **S** | 771.1 | 798.2 |

### B3 Cable composition based on the silane-grafted composition according to Example 7

Table 12 shows an example (Example 8) for a cable mixture based on the composition according to Example 7. The preparation of the uncrosslinked cable mixture is effected by mixing of the components mentioned in Table 12.

**Table 12**

| **Composition** | | **8** |
|---|---|---|
| 7 (Silane-grafted FVM 80wt% vinyl acetate content) | | 100 |
| DIBUTYL TIN DILAURATE (DBTL) catalyst | | 1 |
| MAGNIFIN® H-5A (magnesium dihvdroxide BET=5 m²/g with 1% vinyl trimethoxysilane) | | 100 |
| APYMAG® AOH 60 VS1 (magnesium dihvdroxide BET=6 m²/g with 1% vinvltrimethoxvsilane) | | 50 |
| Total | (phr) | 251.0 |
| Density | (g/cm³) | 1.626 |

The Mooney viscosities (ASTM D 1646) of the composition according to Example 8 are stated in Table 13.

**Table 13**

| Mooney viscosity ASTM D 1646 | | **8** |
|---|---|---|
| ML1+4/140°C | (MU) | 35 |
| Rel. after 10 sec. | (%) | 13.87 |
| Rel. after 20 sec | (%) | 10.83 |
| Rel. after 30 sec | (%) | 9.60 |
| MSR slope | (MU/s) | 0.463 |

For the preparation of the crosslinked cable mixtures, the composition according to Example 8 is vulcanized (crosslinked) in a heating oven at 90°C and 85% atmospheric humidity for 8 hours. The mechanical properties (ASTM D 412, 2240 and 470) and LOI (ASTM D 2863) are stated in Table 14.

**Table 14**

| **Mechanical properties** | | **8** |
|---|---|---|
| Tensile strength (ASTM D 412) | (MPa) | 11.4 |
| Elongation at break (ASTM D 412) | (%) | 165 |
| M 50 (ASTM D 412) | (MPa) | 9.1 |
| M 100 (ASTM D 412) | (MPa) | 11.2 |
| Hardness (ASTM 2240) | (Shore A) | 76 |
| Tear propagation resistance (ASTM D 470) | (N/mm) | 2.0 |
| LOI (ASTM D 2863) | (%) | 42 |

## Claims

1. Crosslinkable compositions containing:
i) 100 parts by weight of at least one grafted α-olefin-vinyl acetate copolymer as component I, and
ii) 0 to 10 parts by weight, preferably 0.01 to 10 parts by weight, particularly preferably 0.02 to 5 parts by weight, based on 100 parts by weight of the component I, of at least one catalyst for crosslinking of the crosslinkable silyl groups present in component I, and
iii) 60 to 200 parts by weight, preferably 90 to 150 parts by weight, based on 100 parts by weight of the component I, of at least one filler having flame-retardant properties,
the grafted α-olefin-vinyl acetate copolymer containing crosslinkable silyl groups, composed of
a) one or more α-olefin-vinyl acetate copolymers as component A, of which at least one, as component A1, has a vinyl acetate content of ≥ 60% by weight, based on the total weight of the α-olefin-vinyl acetate copolymer A1, the total content of vinyl acetate being 55 to 70 % by weight, based on the total weight of the component A, or component A composed exclusively of the component A1, an α-olefin-vinyl acetate copolymer having a vinyl acetate content of ≥ 60 % by weight, based on component A1,
b) at least one unsaturated silane which contains at least one hydrolysable group and which is grafted on to the component A, as component B, wherein
the unsaturated silane which contains at least one hydrolysable group has the following formula:
(R³)₂C=C(R³)-Xₙ-Si(R¹)ₘ(OR²)₍₃₋ₘ₎ (I)
in which:
R¹ independently of one another, denote linear or branched C₁-C₄-alkyl,
R² independently of one another, denote linear, branched or cyclic C₁-C₈-alkyl, preferably methyl, ethyl, n-propyl or isopropyl,
X denotes -(CR⁴₂)ₒ-, -O(O)C(CR⁴₂)ₚ-, -C(O)O-(CR⁴₂)_{q}-, preferably -CH₂-, -(CH₂)₂-, -(CH₂)₃-, -O(O)C(CH₂)₃-, -C(O)O-(CH₂)₃-, -C(O)-O-CH₂-, -O(O)CCH₂-, -C(O)-O-(CH₂)₂-, -O(O)C(CH₂)₂ -, particularly preferably -C(O)-O-CH₂-,
R³ independently of one another, denote hydrogen, C₁-C₃-alkyl, preferably methyl, aryl, preferably phenyl, or aralkyl,
n denotes 0 or 1, preferably 0,
m denotes 0, 1 or 2, preferably 0,
R⁴ independently of one another, denote hydrogen, linear or branched C₁-C₄-alkyl, e.g. methyl or ethyl, preferably hydrogen,
o denotes 1, 2, 3 or 4, preferably 1, 2 or 3,
p denotes 1, 2 or 3,
q denotes 1, 2 or 3,
in which crosslinking can be carried out by exposing the grafted α-olefin-vinyl acetate copolymer to a humid atmosphere or immersing the copolymer in liquid water.

2. Composition according to Claim 1, **characterized in that** in the grafted α-olefin-vinyl acetate copolymer the vinyl acetate content of the component A1 is 70 to 98% by weight, preferably 70 to 90% by weight.

3. Composition according to Claim 1 or 2, **characterized in that** in the grafted the α-olefin-vinyl acetate copolymer α-olefin in the component A is selected from the group consisting of ethene, propene, n-butene, isobutene, pentene, hexene, heptene and octene, preferably ethene and propene, particularly preferably ethene.

4. Composition according to Claim 1, **characterized in that** in the grafted α-olefin-vinyl acetate copolymer the unsaturated silane is selected from the group consisting of vinyltrimethoxysilane, vinyltriethoxysilane, 3-methacryloyloxymethyltrimethoxysilane, 3-methacryloyloxymethyltri-ethoxysilane, 3-methacryloyloxypropyltriethoxysilane, 3-methacryloyloxypropyltrimethoxysilane, vinylethoxydimethoxysilane, allyltrimethoxysilane, allyltriethoxysilane, vinylmethyl-dimethoxysilane, allylmethyldimethoxysilane, vinylmethyldiethoxysilane, allylmethyl-diethoxysilane, vinylmethyldibutoxysilane and mixtures thereof, preferably vinyltrimethoxysilane, vinyltriethoxysilane, 3-methacryloyloxymethyltrimethoxysilane, 3-methacryloyloxypropyltrimethoxysilane or mixtures thereof.

5. Composition according to any of Claims 1 to 4, in which the grafted α-olefin-vinyl acetate copolymer is composed of 1 to 10 parts by weight, preferably 5 to 10 parts by weight, of at least one unsaturated silane which contains at least one hydrolysable group (component B), based on 100 parts by weight of the α-olefin-vinyl acetate copolymer used (component A).

6. Use of the crosslinkable composition according to any of Claims 1 to 5 for the production of insulation or sheath materials for cables or lines.

7. The process for crosslinking compositions according to any of Claim 1 to 5, comprising bringing the crosslinkable composition into contact with water.

8. Crosslinked composition obtainable by a process according to Claim 7.

9. Insulation or sheath materials for cables or lines containing a crosslinked composition according to Claim 8.

10. Cables or lines containing a crosslinked composition according to claim 8.

## Patentansprüche

1. Vernetzbare Zusammensetzungen, enthaltend:
i) 100 Gewichtsteile mindestens eines gepfropften α-Olefin-Vinylacetat-Copolymers als Komponente I und
ii) 0 bis 10 Gewichtsteile, bevorzugt 0,01 bis 10 Gewichtsteile, besonders bevorzugt 0,02 bis 5 Gewichtsteile, bezogen auf 100 Gewichtsteile der Komponente I, mindestens eines Katalysators zur Vernetzung der in Komponente I vorliegenden vernetzbaren Silylgruppen und
iii) 60 bis 200 Gewichtsteile, bevorzugt 90 bis 150 Gewichtsteile, bezogen auf 100 Gewichtsteile der Komponente I, mindestens eines Füllstoffs mit flammhemmenden Eigenschaften,
wobei das gepfropfte α-Olefin-Vinylacetat-Copolymer, das vernetzbare Silylgruppen enthält, aufgebaut ist aus
a) einem oder mehreren α-Olefin-Vinylacetat-Copolymeren als Komponente A, wovon mindestens eines, als Komponente A1, einen Vinylacetat-Gehalt von ≥ 60 Gew.-%, bezogen auf das Gesamtgewicht des α-Olefin-Vinylacetat-Copolymers A1, aufweist, wobei der Gesamtgehalt an Vinylacetat 55 bis 70 Gew.-%, bezogen auf das Gesamtgewicht der Komponente A, beträgt oder Komponente A ausschließlich aus der Komponente A1, einem α-Olefin-Vinylacetat-Copolymer mit einem Vinylacetat-Gehalt von ≥ 60 Gew.-%, bezogen auf Komponente A1, aufgebaut ist,
b) mindestens einem ungesättigten Silan, das mindestens eine hydrolysierbare Gruppe enthält und das auf die Komponente A aufgepfropft ist, als Komponente B, wobei
das ungesättigte Silan, das mindestens eine hydrolysierbare Gruppe enthält, die folgende Formel aufweist:
(R³)₂C=C(R³)-Xₙ-Si(R¹)ₘ(OR²)₍₃₋ₘ₎ (I),
worin bedeuten:
R¹ unabhängig voneinander lineares oder verzweigtes C₁-C₄-Alkyl,
R² unabhängig voneinander lineares oder verzweigtes oder cyclisches C₁-C₈-Alkyl, bevorzugt Methyl, Ethyl, n-Propyl oder Isopropyl,
X -(CR⁴₂)ₒ-, -O(O)C(CR⁴₂)ₚ-, -C(O)O-(CR⁴₂)_{q}-, bevorzugt-CH₂-, -(CH₂)₂-, (CH₂)₃-, O(O)C(CH₂)₃-, -C(O)O-(CH₂)₃-, -C(O)-O-CH₂-, O(O)CCH₂-, -C(O)-O-(CH₂)₂-,-O(O)C(CH₂)₂-, besonders bevorzugt -C(O)-O-CH₂-,
R³ unabhängig voneinander Wasserstoff, C₁-C₃-Alkyl, bevorzugt Methyl, Aryl, bevorzugt Phenyl, oder Aralkyl,
n 0 oder 1, bevorzugt 0,
m 0, 1 oder 2, bevorzugt 0,
R⁴ unabhängig voneinander Wasserstoff, lineares oder verzweigtes C₁-C₄-Alkyl, z. B. Methyl oder Ethyl, bevorzugt Wasserstoff,
o 1, 2, 3 oder 4, bevorzugt 1, 2 oder 3,
p 1, 2 oder 3,
q 1, 2 oder 3,
wobei die Vernetzung dadurch vorgenommen wird, dass das gepfropfte α-Olefin-Vinylacetat-Copolymer einer feuchten Atmosphäre ausgesetzt wird oder das Copolymer in flüssiges Wasser getaucht wird.

2. Zusammensetzung nach Anspruch 1, **dadurch gekennzeichnet, dass** in dem gepfropften α-Vinylacetat-Copolymer der Vinylacetat-Gehalt der Komponente A1 70 bis 98 Gew.-%, bevorzugt 70 bis 90 Gew.-%, beträgt.

3. Zusammensetzung nach Anspruch 1 oder 2, **dadurch gekennzeichnet, dass** in dem gepfropften α-Olefin-Vinylacetat-Copolymer das α-Olefin in der Komponente A aus der Gruppe bestehend aus Ethen, Propen, n-Buten, Isobuten, Penten, Hexen, Hepten und Octen, bevorzugt Ethen und Propen, besonders bevorzugt Ethen, ausgewählt ist.

4. Zusammensetzung nach Anspruch 1, **dadurch gekennzeichnet, dass** in dem gepfropften α-Olefin-Vinylacetat-Copolymer das ungesättigte Silan aus der Gruppe bestehend aus Vinyltrimethoxysilan, Vinyltriethoxysilan, 3-Methacryloyloxymethyltrimethoxysilan, 3-Methacryloyloxymethyltriethoxysilan, 3-Methacryloyloxypropyltriethoxysilan, 3-Methacryloyloxypropyltrimethoxysilan, Vinylethoxydimethoxysilan , Allyltrimethoxysilan, Allyltriethoxysilan, Vinylmethyldimethoxysilan, Allylmethyldimethoxysilan, Vinylmethyldiethoxysilan, Allylmethyldiethoxysilan, Vinylmethyldibutoxysilan und Mischungen davon, bevorzugt Vinyltrimethoxysilan, Vinyltriethoxysilan, 3-Methacryloyloxymethyltrimethoxysilan, 3-Methacryloyloxypropyltrimethoxysilan oder Mischungen davon, ausgewählt ist.

5. Zusammensetzung nach einem der Ansprüche 1 bis 4, wobei das gepfropfte α-Olefin-Vinylacetat-Copolymer aus 1 bis 10 Gewichtsteilen, bevorzugt 5 bis 10 Gewichtsteilen, mindestens eines ungesättigten Silans, das mindestens eine hydrolysierbare Gruppe enthält (Komponente B), bezogen auf 100 Gewichtsteile des eingesetzten α-Olefin-Vinylacetat-Copolymers (Komponente A), aufgebaut ist.

6. Verwendung der vernetzbaren Zusammensetzung nach einem der Ansprüche 1 bis 5 zur Herstellung von Isolier- oder Mantelwerkstoffen für Kabel oder Leitungen.

7. Verfahren zur Vernetzung von Zusammensetzungen nach Anspruch 1 bis 5, bei dem man die vernetzbare Zusammensetzung mit Wasser in Kontakt bringt.

8. Vernetzte Zusammensetzung, erhältlich durch ein Verfahren nach Anspruch 7.

9. Isolier- oder Mantelwerkstoffe für Kabel oder Leitungen, enthaltend eine vernetzte Zusammensetzung nach Anspruch 8.

10. Kabel oder Leitungen, enthaltend eine vernetzte Zusammensetzung nach Anspruch 8.

## Revendications

1. Compositions réticulables contenant :
i) 100 parties en poids d'au moins un copolymère d'α-oléfine-acétate de vinyle greffé en tant que constituant I et
ii) 0 à 10 parties en poids, de préférence 0,01 à 10 parties en poids, de préférence en particulier 0,02 à 5 parties en poids, pour 100 parties en poids du constituant I, d'au moins un catalyseur pour la réticulation des groupes silyle réticulables présents dans le constituant I et
iii) 60 à 200 parties en poids, de préférence 90 à 150 parties en poids, pour 100 parties en poids du constituant I, d'au moins une charge ayant des propriétés ignifuges,
le copolymère d'α-oléfine-acétate de vinyle greffé contenant des groupes silyle réticulables étant composé de
a) un ou plusieurs copolymères d'α-oléfine-acétate de vinyle en tant que constituant A, parmi lesquels au moins un, en tant que constituant A1, a une teneur en acétate de vinyle ≥ 60 % en poids, par rapport au poids total du copolymère d'α-oléfine-acétate de vinyle A1, la teneur totale en acétate de vinyle étant de 55 à 70 % en poids, par rapport au poids total du constituant A, ou le constituant A étant composé exclusivement du constituant A1, un copolymère d'α-oléfine-acétate de vinyle ayant une teneur en acétate de vinyle ≥ 60 % en poids, par rapport au constituant A1,
b) au moins un silane insaturé qui contient au moins un groupe hydrolysable et qui est greffé sur le constituant A, en tant que constituant B, le silane insaturé qui contient au moins un groupe hydrolysable ayant la formule suivante :
(R³)₂C=C(R³)-Xₙ-Si(R¹)ₘ(OR²)₍₃₋ₘ₎ (I)
dans laquelle :
les R¹ désignent chacun indépendamment des autres un groupe alkyle en C₁-C₄ linéaire ou ramifié,
les R² désignent chacun indépendamment des autres un groupe alkyle en C₁-C₈ linéaire, ramifié ou cyclique, de préférence méthyle, éthyle, *n*-propyle ou isopropyle,
X désigne -(CR⁴₂)ₒ-, -O(O)C(CR⁴₂)ₚ-, -C(O)O-(CR⁴₂)_{q}-, de préférence -CH₂-, -(CH₂)₂-, - (CH₂)₃-, -O(O)CO(CH₂)₃-, - C(O)O-(CH₂)₃-, -C(O)-O-CH₂-, -O(O)CCH₂-, -C(O)-O-(CH₂)₂-, -O(O)C(CH₂)₂-, de préférence en particulier -C(O)-O-CH₂-,
les R³ désignent chacun indépendamment des autres l'atome d'hydrogène ou un groupe alkyle en C₁-C₃, de préférence méthyle, aryle, de préférence phényle, ou aralkyle,
n désigne 0 ou 1, de préférence 0,
m désigne 0, 1 ou 2, de préférence 0,
les R⁴ désignent chacun indépendamment des autres l'atome d'hydrogène ou un groupe alkyle en C₁-C₄ linéaire ou ramifié par exemple méthyle ou éthyle, de préférence l'atome d'hydrogène,
o désigne 1, 2, 3 ou 4, de préférence 1, 2 ou 3,
p désigne 1, 2 ou 3,
q désigne 1, 2 ou 3,
la réticulation pouvant être effectuée par exposition du copolymère d'α-oléfine-acétate de vinyle greffé à une atmosphère humide ou immersion du copolymère dans de l'eau liquide.

2. Composition selon la revendication 1, **caractérisée en ce que** dans le copolymère d'α-oléfine-acétate de vinyle greffé la teneur en acétate de vinyle du constituant A1 est de 70 à 98 % en poids, de préférence de 70 à 90 % en poids.

3. Composition selon la revendication 1 ou 2, **caractérisée en ce que** dans le copolymère d'α-oléfine-acétate de vinyle greffé l'α-oléfine dans le constituant A est choisie dans le groupe constitué par l'éthène, le propène, le n-butène, l'isobutène, le pentène, l'hexène, l'heptène et l'octène, de préférence l'éthène et le propène, de préférence en particulier l'éthène.

4. Composition selon la revendication 1, **caractérisée en ce que** dans le copolymère d'α-oléfine-acétate de vinyle greffé le silane insaturé est choisi dans le groupe constitué par le vinyltriméthoxysilane, le vinyltriéthoxysilane, le 3-méthacryloyloxyméthyltriméthoxysilane, le 3-méthacryloyloxyméthyltriéthoxysilane, le 3-méthacryloyloxypropyltriéthoxysilane, le 3-méthacryloyloxypropyltriméthoxysilane, le vinyléthoxydiméthoxysilane, l'allyltriméthoxysilane, l'allyltriéthoxysilane, le vinylméthyldiméthoxysilane, l'allylméthyldiméthoxysilane, le vinylméthyldiéthoxysilane, l'allylméthyldiéthoxysilane, le vinylméthyldibutoxysilane et les mélanges de ceux-ci, de préférence le vinyltriméthoxysilane, le vinyltriéthoxysilane, le 3-méthacryloyloxyméthyltriméthoxysilane, le 3-méthacryloyloxypropyltriméthoxysilane ou les mélanges de ceux-ci.

5. Composition selon l'une quelconque des revendications 1 à 4, dans laquelle le copolymère d'α-oléfine-acétate de vinyle greffé est composé de 1 à 10 parties en poids, de préférence 5 à 10 parties en poids, d'au moins un silane insaturé qui contient au moins un groupe hydrolysable (constituant B), pour 100 parties en poids du copolymère d'α-oléfine-acétate de vinyle utilisé (constituant A).

6. Utilisation de la composition réticulable selon l'une quelconque des revendications 1 à 5 pour la production de matériaux isolants ou de gaine pour des câbles ou des lignes.

7. Procédé pour la réticulation de compositions selon l'une quelconque des revendications 1 à 5, comprenant la mise en contact de la composition réticulable avec de l'eau.

8. Composition réticulée pouvant être obtenue par un procédé selon la revendication 7.

9. Matériaux isolants ou de gaine pour des câbles ou des lignes contenant une composition réticulée selon la revendication 8.

10. Câbles ou lignes contenant une composition réticulée selon la revendication 8.
